# EUROPÄISCHE PATENTANMELDUNG

(11) **EP 3 564 136 A1**
(43) Veröffentlichungstag der Anmeldung: **06.11.2019**
(21) Anmeldenummer: 18170355.4
(22) Anmeldetag: 02.05.2018
(51) Int. Cl.: B65B 7/16, B65B 9/04, B65B 59/00, B65B 59/04, B65B 43/46, B65B 43/52, B65G 17/06, B65G 17/42, B65B 41/14, B65G 17/32, B65B 47/04, B65B 41/04

(54) **VERPACKUNGSMASCHINE MIT FÖRDEREINRICHTUNG**

(71) Anmelder: MULTIVAC Sepp Haggenmüller SE & Co. KG, 87787 Wolfertschwenden (DE)
(72) Erfinder: EHRMANN, Elmar, 87730 Bad Grönenbach (DE)
(74) Vertreter: Grünecker Patent- und Rechtsanwälte PartG mbB

(57) **Zusammenfassung**

Die Verpackungsmaschine (1) umfasst eine Einlegestrecke (7) zum Positionieren von Produkten auf oder in einem ersten Verpackungsbestandteil (13), eine Siegelstation (9) zum Bilden einer Verpackung durch siegelndes Verbinden eines zweiten Verpackungsbestandteils (23) mit dem ersten Verpackungsbestandteil (13), und eine Fördereinrichtung (11) zum Fördern des ersten Verpackungsbestandteils (13) durch die Einlegestrecke (7) und weiter zu der Siegelstation (9). Die Fördereinrichtung (11) umfasst bezüglich der Transportrichtung (T) zu beiden Seiten jeweils eine Kettenführung (31) mit einer entlang dieser antreibbar geführten Transportkette (33). Die Transportketten (33) sind jeweils als Klammerkette mit entlang der Kettenerstreckung hintereinander angeordneten Klammerelementen (37) zum klammernden Halten einer als erster Verpackungsbestandteil (13) zu fördernden Unterfolienbahn (15) ausgebildet. Die Transportketten (33) umfassen entlang der Kettenerstreckung hintereinander angeordnete Anbringungsstellen (41), die mit korrespondierenden Anbringungsstellen (41) der gegenüberliegenden Transportkette (33) zum Anbringen von quer zur Transportrichtung (T) ausgerichteten Stäben (43) zum Transportieren von als erster Verpackungsbestandteil (13) zu fördernden Verpackungsschalen (17) zusammenwirken.

## Beschreibung

Die Erfindung betrifft eine Verpackungsmaschine mit einer Siegelstation zum Bilden einer Verpackung durch siegelndes Verbinden eines ersten Verpackungsbestandteils und eines zweiten Verpackungsbestandteils.

Beispielsweise aus der DE 690 03 503 T2 ist eine Verpackungsmaschine des Typs "Tray Sealer" bekannt. In einem Anfangsbereich der Verpackungsmaschine werden vorgefertigte Schalen (Trays) von einem Stapel einzeln abgestapelt. Die Schalen werden mittels einer Fördereinrichtung dann nacheinander einer Einlegestrecke und einer Siegelstation zugeführt. In der Einlegestrecke werden die Schalen mit zu verpackenden Produkten befüllt. In der Siegelstation werden die befüllten Schalen durch Ansiegeln einer Oberfolie verschlossen. Die Fördereinrichtung weist eine Reihe von Querstäben auf, deren Enden jeweils mit zwei einander gegenüberliegenden, seitlich an der Verpackungsmaschine endlos umlaufenden Ketten verbunden sind. Zumindest eine der Ketten wird angetrieben, sodass die Querstäbe entlang einer Transportrichtung bewegt werden. Die Schalen werden von den Querstäben entlang der Transportrichtung durch die Einlegestrecke und zu der Siegelstation geschoben. Nachdem eine Schale auf eine in der Siegelstation befindliche Platte geschoben wurde, wird der entsprechende Querstab in eine leichte Rückwärtsbewegung versetzt, bis der Querstab zumindest soweit zurückgezogen wurde, dass er den Betrieb der Siegelstation nicht mehr behindert. Nach Beendigung des Siegelvorgangs werden die Querstäbe erneut in eine Vorschubbewegung versetzt.

Außerdem sind Verpackungsmaschinen des Typs "Tiefziehverpackungsmaschine" bekannt. Bei diesen werden mittels einer Formstation Mulden in einer Unterfolienbahn ausgebildet. Die Mulden werden in einer Einlegestrecke mit zu verpackenden Produkten befüllt. In einer Siegelstation werden die befüllten Mulden mit einer Oberfolie verschlossen. Die Unterfolienbahn wird mittels einer Fördereinrichtung entlang einer Transportrichtung zu der Formstation, dann zu der Einlegestrecke und schließlich zu der Siegelstation gefördert. Die Fördereinrichtung umfasst zwei auf bezüglich der Transportrichtung einander gegenüberliegenden Seiten der Verpackungsmaschine endlos umlaufende Klammerketten mit Klammerelementen zum klammernden Halten der Unterfolienbahn auf beiden Seiten.

Verpackungsmaschinen des Typs Tray Sealer und Tiefziehverpackungsmaschinen sind jeweils spezialisierte Bauformen von Verpackungsmaschinen und haben daher ein relativ begrenztes Einsatzgebiet. Es ist daher oftmals erforderlich, dass für unterschiedliche Verpackungsszenarien unterschiedliche Verpackungsmaschinen angeschafft werden müssen.

Es ist Aufgabe der Erfindung, eine Verpackungsmaschine bereitzustellen, die ein möglichst breites Spektrum an Verpackungsanwendungen bedienen kann.

Diese Aufgabe wird durch den Gegenstand von Anspruch 1 gelöst. Die abhängigen Ansprüche geben vorteilhafte Ausführungsformen der Erfindung an.

Eine erfindungsgemäße Verpackungsmaschine umfasst eine Einlegestrecke zum Positionieren von zu verpackenden Produkten auf oder in einem ersten Verpackungsbestandteil. Die Produkte können im Bereich der Einlegestrecke manuell oder automatisch auf oder in dem ersten Verpackungsbestandteil positioniert werden. Zudem umfasst die Verpackungsmaschine eine Siegelstation zum Bilden einer Verpackung durch siegelndes Verbinden eines zweiten Verpackungsbestandteils mit dem ersten Verpackungsbestandteil. Die Siegelstation kann insbesondere dazu ausgelegt sein, den ersten und den zweiten Verpackungsbestandteil, die insbesondere aus Kunststoff bestehen oder Kunststoff umfassen können, mittels Temperatur- und/oder Druckanwendung aneinander zu siegeln. Durch ein Ansiegeln des zweiten Verpackungsbestandteils an den ersten Verpackungsbestandteil kann insbesondere eine geschlossene Verpackung gebildet werden, die das zu verpackende Produkt umschließt.

Die Verpackungsmaschine umfasst zudem eine Fördereinrichtung zum Fördern des ersten Verpackungsbestandteils entlang einer Transportrichtung durch die Einlegestrecke und weiter zu der Siegelstation. Die Fördereinrichtung umfasst bezüglich der Transportrichtung zu beiden Seiten jeweils eine Kettenführung mit einer entlang dieser antreibbar geführten Transportkette. Die Transportketten sind jeweils als Klammerkette mit entlang der Kettenerstreckung hintereinander angeordneten Klammerelementen zum klammernden Halten einer als erster Verpackungsbestandteil zu fördernden Unterfolienbahn ausgebildet. Zudem umfassen die Transportketten jeweils entlang der Kettenerstreckung hintereinander angeordnete Anbringungsstellen, die mit korrespondierenden Anbringungsstellen der bezüglich der Transportrichtung auf der anderen Seite liegenden Transportkette zum Anbringen von quer zur Transportrichtung ausgerichteten Stäben zusammenwirken. Die Stäbe sind zum Transportieren von als erster Verpackungsbestandteil zu fördernden Verpackungsschalen ausgelegt. Insbesondere können die Stäbe dazu ausgelegt sein, Verpackungsschalen entlang der Transportrichtung zu schieben.

Dadurch, dass die Transportketten sowohl Klammerelemente zum klammernden Halten einer Unterfolienbahn als auch Anbringungsstellen zum Anbringen von quer zur Transportrichtung ausgerichteten Stäben zum Transportieren von Verpackungsschalen umfassen, kann die Verpackungsmaschine als ersten Verpackungsbestandteil sowohl eine Unterfolienbahn als auch alternativ separate Verpackungsschalen verwenden. Der erste Verpackungsbestandteil kann als Unterfolienbahn von einer Vorratsrolle zugeführt werden oder alternativ in Form bereits vorgefertigter Verpackungsschalen (einzeln oder in Verbünden) zugeführt werden. Je nach zu verpackenden Produkten und/oder gewünschtem Verpackungsdesign kann hierdurch eine geeignete Verpackungsstrategie gewählt werden, ohne mehrere separate Verpackungsmaschinen vorsehen zu müssen.

Vorzugsweise sind die Stäbe lösbar an jeweils zueinander korrespondierenden Anbringungsstellen der Transportketten anbringbar. So lässt sich die Verpackungsmaschine durch Anbringen oder Entfernern der Stäbe zum Verwenden mit Verpackungsschalen bzw. zum Verwenden mit einer Unterfolienbahn umrüsten. Wenn für die Verwendung mit einer Unterfolienbahn die Stäbe entfernt werden können, kann auf einfache Art sichergestellt werden, dass bei der Verarbeitung der Unterfolienbahn keine Beeinträchtigung des Verpackungsablaufs durch die Stäbe erfolgt.

Die Erfindung betrifft auch eine Verpackungsmaschine mit permanent oder lösbar an jeweils korrespondiere Anbringungsstellen angebrachten Stäben.

Die Stäbe können beispielsweise durch eine Schraubverbindung, durch eine Klemmverbindung, durch Magnetverbindung oder durch eine Steckverbindung an jeweils korrespondierenden Anbringungsstellen der Transportketten anbringbar sein. Durch eine Schraubverbindung lässt sich eine besonders sichere Anbringung erreichen. Eine Klemmverbindung, eine Magnetverbindung oder eine Steckverbindung können besonders schnell herstellbar sein. Es ist denkbar, dass die Stäbe an den beiden korrespondierenden Anbringungsstellen auf dieselbe Art und Weise angebracht werden können. Es wäre aber auch denkbar, dass die Stäbe an den Anbringungsstellen einer der beiden Transportketten auf eine erste Art anbringbar sind und an den Anbringungsstellen der zweiten Transportkette auf eine zweite Art anbringbar sind.

Vorzugsweise ist ein Abstand zweier bezüglich der Kettenerstreckung aufeinanderfolgender Klammerelemente kleiner als ein Abstand zweier bezüglich der Kettenerstreckung aufeinanderfolgender Anbringungsstellen. So wird gewährleistet, dass beim Transport einer Unterfolienbahn diese an ausreichend vielen Klammerelementen gehalten ist, um definiert und sicher transportiert zu werden.

Es können insbesondere entlang der Kettenerstreckung jeweils zwischen zwei aufeinanderfolgenden Anbringungsstellen mehrere Klammerelemente angeordnet sein, beispielsweise zumindest zwei, zumindest drei, zumindest vier oder mehr als vier Klammerelemente.

Die Siegelstation kann ein Siegelwerkzeugoberteil und ein Siegelwerkzeugunterteil umfassen, die dazu konfiguriert sind, zum Ansiegeln einer Oberfolie als zweiter Verpackungsbestandteil an den ersten Verpackungsbestandteil zusammenzuwirken. Das Siegelwerkzeugunterteil kann relativ zu dem Siegelwerkzeugoberteil beweglich sein.

Die Fördereinrichtung kann eine Antriebseinrichtung umfassen, die zum getakteten Antreiben der Transportketten zu einer umlaufenden Bewegung entlang der jeweiligen Kettenführung konfiguriert ist. Ein getaktetes Antreiben der Transportketten erleichtert die Verarbeitung in der Siegelstation.

Gemäß einer bevorzugten Ausführungsform umfasst die Verpackungsmaschine eine Eingabeeinrichtung, mittels der ein Folienverarbeitungs-Betriebsmodus und ein Schalenverarbeitungs-Betriebsmodus auswählbar sind. Eine Antriebseinrichtung der Fördereinrichtung kann dazu konfiguriert sein, in dem Folienverarbeitungs-Betriebsmodus die Transportketten getaktet entlang der jeweiligen Kettenführung in einer gleichbleibenden Vorschubrichtung anzutreiben, und so die Unterfolie intermittierend entlang der Transportrichtung zu fördern. Die Antriebseinrichtung kann dazu konfiguriert sein, in dem Schalenverarbeitungs-Betriebsmodus die Transportketten entlang der jeweiligen Kettenführung derart getaktet anzutreiben, dass jeder Takt einen Vorschub der Transportketten entlang der Vorschubrichtung und einen kleineren Rückschub der Transportketten entgegen der Vorschubrichtung umfasst. Auf diese Weise können die Verpackungsschalen entlang der Transportrichtung gefördert werden. Durch den Rückschub der Transportketten kann gewährleistet werden, dass ein Stab nach dem Einschieben einer Verpackungsschale in die Siegelstation wieder zurückgezogen wird, sodass er den Siegelvorgang nicht stört. Anschließend kann durch den erneuten Vorschub der Stab wieder mit der verschlossenen Verpackungsschale in Eingriff kommen und diese aus der Siegelstation fördern.

Gemäß einer Ausführungsform umfasst die Siegelstation zwei Siegel-Unterstationen mit jeweils einem Siegelwerkzeugoberteil und einem Siegelwerkzeugunterteil. Eine erste Siegel-Unterstation kann dazu konfiguriert sein, zum Bilden einer Verpackung eine Oberfolienbahn als zweiten Verpackungsbestandteil an eine als erster Verpackungsbestandteil zu verarbeitende Unterfolienbahn anzusiegeln. Eine zweite Siegel-Unterstation kann dazu konfiguriert sein, zum Bilden einer Verpackung eine Oberfolienbahn als zweiten Verpackungsbestandteil an eine als erster Verpackungsbestandteil zu verarbeitende Verpackungsschale anzusiegeln. Alternativ wäre es aber auch denkbar, dass die Siegelstation nur jeweils ein einziges Siegelwerkzeugoberteil und Siegelwerkzeugunterteil umfasst, welche beispielsweise umgerüstet werden könnten, je nachdem, ob eine Unterfolienbahn oder Verpackungsschalen als erster Verpackungsbestandteil verarbeitet werden sollen.

Gemäß einer Ausführungsform umfasst die Siegelstation eine Querschneideinrichtung, die dazu konfiguriert ist, die Verpackungen in einer Schneidrichtung quer zu der Transportrichtung voneinander zu separieren. Bevorzugterweise ist die Siegelstation dazu konfiguriert, zunächst den ersten und den zweiten Verpackungsbestandteil siegelnd zu verbinden und dann den Schneidvorgang durch die Querschneideinrichtung durchzuführen. Durch das Integrieren der Querschneideinrichtung in die Siegelstation lässt sich entlang der Transportrichtung Bauraum einsparen. Wenn die Siegelstation zwei Siegel-Unterstationen umfasst, ist die Querschneideinrichtung vorzugsweise in der ersten Siegel-Unterstation zum Verarbeiten der Unterfolienbahn vorgesehen. Ein Schnitt in Querrichtung durch den ersten und den zweiten Verpackungsbestandteil ist auch beim Verarbeiten einer Unterfolie unkritisch, da einzelne Verpackungen entlang der Querrichtung immer noch zusammenhängen und so auch nach dem Durchführen des Querschnitts mittels der Klammerketten weitertransportiert werden können. Es wäre aber auch denkbar, die Querschneideinrichtung der Siegelstation nachgeordnet vorzusehen.

Die Verpackungsmaschine kann bezüglich der Transportrichtung der Siegelstation nachgeordnet eine Längsschneideinrichtung umfassen. Die Längsschneideinrichtung kann dazu konfiguriert sein, die Verpackungen in einer Schneidrichtung parallel zu der Transportrichtung zu separieren. Sind sowohl eine Querschneideinrichtung als auch eine Längsschneideinrichtung vorgesehen, können die verschlossenen Verpackungen vollständig voneinander separiert werden. Es wäre aber auch denkbar, immer eine gewisse Anzahl von Verpackungen im Verbund zu belassen.

Gemäß einer Ausführungsform umfasst die Siegelstation eine Vollschnitteinrichtung, die dazu konfiguriert ist, gesiegelte Verpackungsschalen durch Schneiden des zweiten Verpackungsbestandteils, insbesondere einer Oberfolienbahn, aus dem Verbund auszuschneiden. Wenn die Siegelstation zwei Siegel-Unterstationen umfasst, ist die Vollschnitteinrichtung vorzugsweise in der zweiten Siegel-Unterstation zum Verarbeiten der Verpackungsschalen vorgesehen.

Wenn mit der Verpackungsmaschine eine Unterfolienbahn verarbeitet werden soll, wäre es prinzipiell ausreichend, wenn die zu verpackenden Produkte in der Einlegestrecke einfach auf die Unterfolienbahn gelegt werden. Wenn in der Siegelstation dann die Verpackungen durch siegelndes Verbinden eines zweiten Verpackungsbestandteils, insbesondere einer Oberfolie, mit der Unterfolienbahn gebildet werden, sind die Produkte zwischen der Unterfolienbahn und dem zweiten Verpackungsbestandteil, insbesondere der Oberfolie, verpackt. Für bestimmte Anwendungen ist es jedoch vorteilhaft, wenn die Verpackungsmaschine eine Formstation umfasst, die dazu konfiguriert ist, durch Tiefziehen in der Unterfolienbahn Verpackungsmulden auszubilden. In der Einlegestrecke können die zu verpackenden Produkte dann in diese Verpackungsmulden gelegt werden. Gegenüber einem einfachen Auflegen auf die ungeformte Unterfolie kann so eine definiertere Formgebung der Verpackung erreicht werden.

Die optionale Formstation kann der Einlegestrecke und der Siegelstation bezüglich der Transportrichtung vorgeordnet sein. Die Fördereinrichtung kann dazu konfiguriert sein, die Unterfolienbahn zu der Formstation, weiter zu der Einlegestrecke und noch weiter zu der Siegelstation zu fördern.

Die Fördereinrichtung kann dazu konfiguriert sein, die Verpackungsschalen durch schiebenden Eingriff mit den Stäben zu fördern.

Vorzugsweise umfasst die Fördereinrichtung zumindest eine Auflagefläche, auf der die Verpackungsschalen während des Förderns durch die Stäbe aufliegen. Die Auflagefläche kann beispielsweise durch sich entlang der Transportrichtung erstreckende Schienen oder eine Auflageplatte bereitgestellt sein.

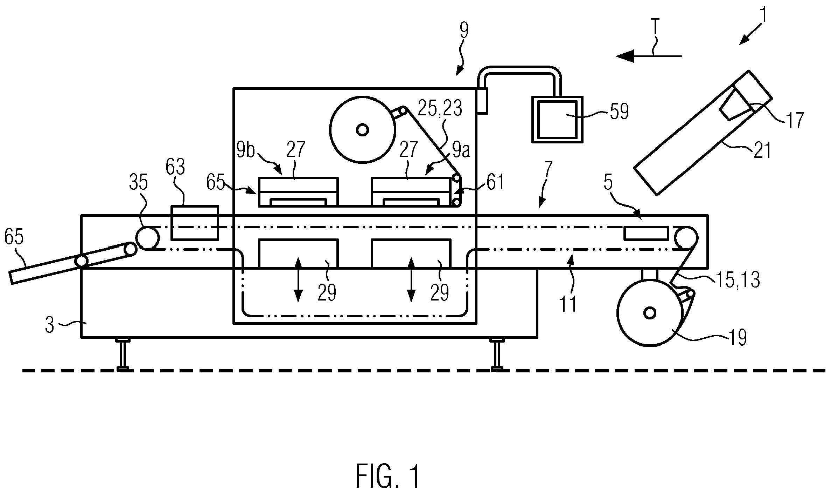

Im Folgenden soll die Erfindung anhand von Ausführungsbeispielen unter Bezugnahme auf die Figuren weiter erläutert werden. Dabei zeigt
- Fig. 1: eine schematische Seitenansicht auf eine Verpackungsmaschine gemäß einer Ausführungsform;

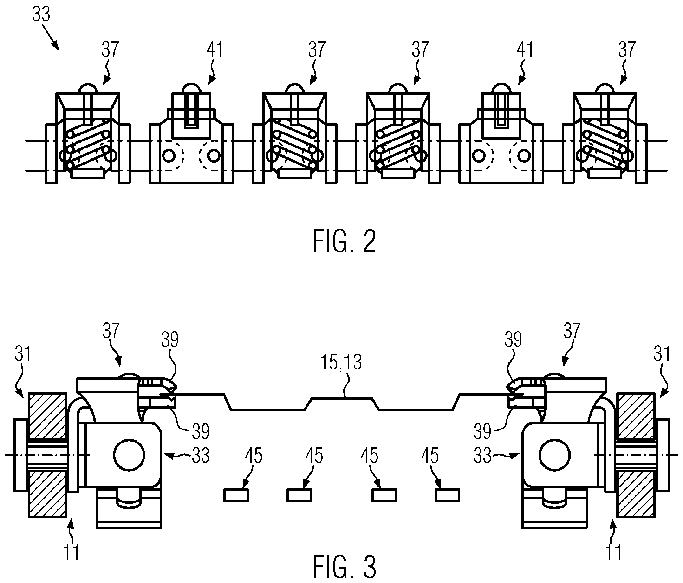

- Fig. 2: eine schematische Darstellung einer Transportkette einer Verpackungsmaschine gemäß einer Ausführungsform in einer Schnittansicht, wobei die Schnittebene eine vertikale Ebene ist, die parallel zur Transportrichtung verläuft;
- Fig. 3: eine schematische ausschnittsweise Schnittansicht auf die Transporteinrichtung einer Verpackungsmaschine gemäß einer Ausführungsform bei Verwendung einer Unterfolienbahn als erster Verpackungsbestandteil, wobei die Schnittebene im Bereich der Einlegestrecke senkrecht zur Transportrichtung liegt;

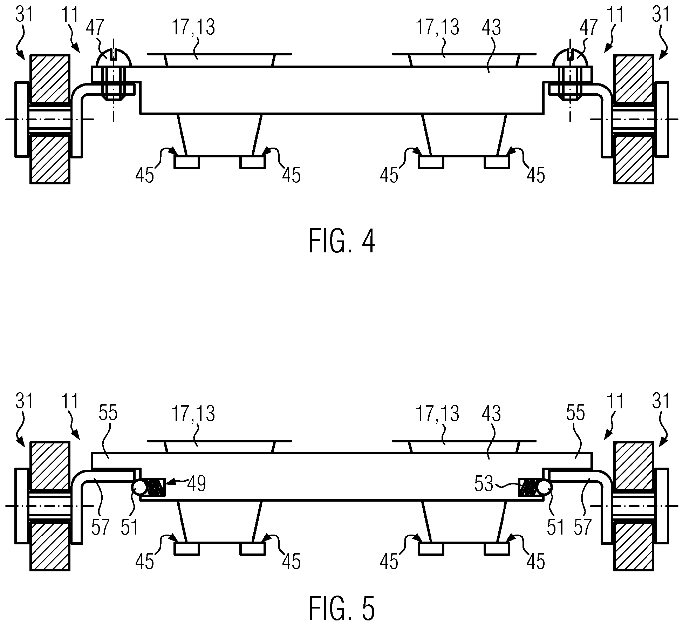

- Fig. 4: eine schematische ausschnittsweise Schnittansicht auf die Transporteinrichtung einer Verpackungsmaschine gemäß einer Ausführungsform bei Verwendung einer Verpackungsschale als erster Verpackungsbestandteil, wobei die Schnittebene im Bereich der Einlegestrecke senkrecht zur Transportrichtung liegt; und
- Fig. 5: eine schematische ausschnittsweise Schnittansicht auf die Transporteinrichtung einer Verpackungsmaschine gemäß einer weiteren Ausführungsform bei Verwendung einer Verpackungsschale als erster Verpackungsbestandteil, wobei die Schnittebene im Bereich der Einlegestrecke senkrecht zur Transportrichtung liegt.

Figur 1 zeigt in schematischer Seitenansicht eine Verpackungsmaschine 1 gemäß einer Ausführungsform. Die Verpackungsmaschine 1 umfasst ein Maschinengestell 3, an dem entlang einer Transportrichtung T hintereinander eine Formstation 5, eine Einlegestrecke 7 und eine Siegelstation 9 angeordnet sind. Die Verpackungsmaschine 1 umfasst eine Fördereinrichtung 11 zum Fördern eines ersten Verpackungsbestandteils 13 entlang der Transportrichtung T durch die Einlegestrecke 7, weiter zu der Siegelstation 9 und darüber hinaus. Eine Besonderheit der erfindungsgemäßen Verpackungsmaschine 1 ist, dass, wie nachfolgend beschrieben, sowohl eine Unterfolienbahn 15 (in Figur 1 dargestellt) als auch Verpackungsschalen 17 (in den Figuren 4 und 5 dargestellt) als erster Verpackungsbestandteil 13 verarbeitet werden können.

Wird eine Unterfolienbahn 15 als erster Verpackungsbestandteil 13 verwendet, kann diese von einer Vorratsrolle 19 abgezogen werden und dann mittels der Fördereinrichtung 11 der Formstation 5 zugeführt werden. Die Formstation 5 ist dazu ausgelegt, in der Unterfolienbahn 15 Verpackungsmulden durch Tiefziehen auszubilden. In der Einlegestrecke 7 werden die Verpackungsmulden anschließend manuell oder automatisch mit zu verpackenden Produkten befüllt. In der gezeigten Variante ist die Formstation 5 entlang der Transportrichtung T vor der Einlegestrecke 7 vorgesehen. Es wäre beispielsweise auch denkbar, die Formstation 5 unterhalb der Einlegestrecke 7 vorzusehen, um Platz zu sparen. Gemäß einer anderen Ausführungsform kann die Formstation 5 auch weggelassen werden. Die Produkte können dann im Bereich der Einlegestrecke 7 einfach auf die Unterfolienbahn 15 aufgelegt werden.

Werden dagegen Verpackungsschalen 17 als erster Verpackungsbestandteil 13 verwendet, können diese der Formstation 5 nachgeordnet direkt in die Verpackungsmaschine 1 eingelegt werden. Hierzu könnte beispielsweise ein Verpackungsschalen-Spender 21 mit einer Abstapeleinrichtung vorgesehen sein. Die Verpackungsschalen 17 werden dann im Bereich der Einlegestrecke 7 manuell oder automatisch mit zu verpackenden Produkten gefüllt.

Nachdem im Bereich der Einlegestrecke 7 die zu verpackenden Produkte auf oder in dem ersten Verpackungsbestandteil 13 (Unterfolienbahn 15 oder Verpackungsschale 17) positioniert wurden, wird in der Siegelstation 9 durch siegelndes Verbinden eines zweiten Verpackungsbestandteils 23 mit dem ersten Verpackungsbestandteil 13 eine Verpackung gebildet. Bei dem zweiten Verpackungsbestandteil 23 kann es sich insbesondere um eine Oberfolie 25 handeln, die in der Siegelstation 9 an den ersten Verpackungsbestandteil 13 angesiegelt wird. Die Siegelstation 9 umfasst vorzugsweise ein Siegelwerkzeugoberteil 27 und ein relativ dazu bewegliches Siegelwerkzeugunterteil 29. Zum Verbinden des ersten und des zweiten Verpackungsbestandteils 13, 23 können sich das Siegelwerkzeugoberteil 27 und das Siegelwerkzeugunterteil 29 relativ zueinander gesehen aufeinander zubewegen und die Verpackungsbestandteile 13, 23 mittels Wärmeverschweißens, mittels Ultraschallverschweißens und/oder mittels Druckeinwirkung oder anderweitig miteinander versiegeln. Die entstehende Verpackung kann insbesondere geschlossen sein.

In der dargestellten Variante umfasst die Siegelstation 9 zwei Siegel-Unterstationen 9a, 9b mit jeweils einem Siegelwerkzeugoberteil 27 und einem Siegelwerkzeugunterteil 29. Die erste Siegel-Unterstation 9a kann dazu konfiguriert sein, zum Bilden einer Verpackung die Oberfolienbahn 25 als zweiten Verpackungsbestandteil 23 an eine als erster Verpackungsbestandteil 13 zu verarbeitende Unterfolienbahn 15 anzusiegeln. Die zweite Siegel-Unterstation 9b kann dazu konfiguriert sein, zum Bilden einer Verpackung die Oberfolienbahn 25 als zweiten Verpackungsbestandteil 23 an eine als erster Verpackungsbestandteil 13 zu verarbeitende Verpackungsschale 17 anzusiegeln. Alternativ wäre es aber auch denkbar, dass die Siegelstation 9 nur jeweils ein einziges Siegelwerkzeugoberteil 27 und Siegelwerkzeugunterteil 29 umfasst, welche umgerüstet oder ausgetauscht werden könnten, je nachdem, ob eine Unterfolienbahn 15 oder Verpackungsschalen 17 als erster Verpackungsbestandteil 13 verarbeitet werden sollen.

Erfindungsgemäß ist die Fördereinrichtung 11 sowohl dazu geeignet, eine Unterfolienbahn 15 als ersten Verpackungsbestandteil 13 zu fördern, als auch dazu geeignet, Verpackungsschalen 17 als ersten Verpackungsbestandteil 13 zu fördern. Die Fördereinrichtung 11 umfasst zu beiden lateralen Seiten der Transportrichtung T jeweils eine an dem Maschinenrahmen 3 vorgesehene Kettenführung 31 (siehe Figuren 3, 4 und 5). In den Kettenführungen 31 ist jeweils eine entlang der jeweiligen Kettenführung 31 endlos umlaufend geführte Transportkette 33 vorgesehen. Das Obertrum und das Untertrum der Transportketten 33 verläuft jeweils parallel zur Transportrichtung T. Die Fördereinrichtung 11 umfasst eine Antriebseinrichtung 35 zum Antreiben der Transportketten 33 entlang der jeweiligen Kettenführung 31.

Figur 2 zeigt eine Schnittansicht durch eine Transportkette 33 in einer vertikalen Schnittebene, die parallel zur Transportrichtung T liegt, in Blickrichtung von der Mitte der Verpackungsmaschine 1 nach außen. Die Transportkette 33 umfasst entlang der Kettenerstreckung hintereinander angeordnete Klammerelemente 37 zum klammernden Halten einer als erster Verpackungsbestandteil 13 zu fördernden Unterfolienbahn 15. Figur 3 zeigt in ausschnittsweiser Schnittansicht mit einer Schnittebene, die senkrecht zur Transportrichtung T steht, wie eine Unterfolienbahn 15 zwischen zwei zueinander korrespondierenden Klammerelementen 37 der gegenüberliegenden Transportketten 33 gehalten ist. Die Klammerelemente 37 umfassen jeweils zwei Klammerarme 39, zwischen denen die Unterfolienbahn 15 klammernd gehalten wird. Wie anhand von Figur 2 ersichtlich, werden die Klammerarme 39 mittels einer Spannfeder zum klammernden Halten der Unterfolienbahn 15 aufeinander zu beaufschlagt. In einem Anfangsbereich der Verpackungsmaschine 1, in dem die Unterfolienbahn 15 von den Klammerelementen 37 aufgenommen wird, werden die Klammerarme 39 des Klammerelements 37 entgegen der Vorspannung voneinander beabstandet, sodass die Unterfolienbahn 15 aufgenommen werden kann. Nach Passieren des Anfangsbereichs wirkt die Vorspannung so, dass die Klammerelemente 39 die zwischen ihnen liegende Unterfolienbahn 15 greifen. In einem Endbereich der Verpackungsmaschine 1, in dem die Unterfolienbahn 15 wieder freigegeben werden soll, wird der Vorspannung der Klammerarme 39 wieder entgegengewirkt, sodass die Unterfolienbahn 15 freigegeben wird. Wenn die Antriebseinrichtung 35 die Transportketten 33 entlang der jeweiligen Kettenführung 31 antreibt, wird die zwischen den Klammerelementen 37 gehaltene Unterfolienbahn 15 entlang der Transportrichtung T gefördert.

Die Transportketten 33 umfassen des Weiteren entlang der Kettenerstreckung hintereinander angeordnete Anbringungsstellen 41. Die Anbringungsstellen 41 wirken mit korrespondierenden Anbringungsstellen 41 der bezüglich der Transportrichtung T auf der anderen Seite liegenden Transportkette 33 zum Anbringen von quer zur Transportrichtung T ausgerichteten Stäben 43 zusammen. Die Stäbe 43 sind lösbar an jeweils korrespondierenden Anbringungsstellen 41 der Transportketten 33 anbringbar, sodass sie quer zur Transportrichtung T liegen. Werden die Transportketten 33 entlang der jeweiligen Kettenführungen 31 angetrieben, werden als erster Verpackungsbestandteil 13 zu verarbeitende Verpackungsschalen 17 von den Stäben 43 entlang der Transportrichtung T durch schiebenden Eingriff gefördert. Um die Verpackungsschalen 17 nach unten hin abzustützen, ist eine Auflagefläche 45 vorgesehen, auf der die Verpackungsschalen 17 während des Förderns durch die Stäbe 43 aufliegen. In der dargestellten Ausführungsform (siehe Figuren 4 und 5) ist die Auflagefläche 45 durch sich entlang der Transportrichtung T erstreckende Auflagebalken gebildet.

Die Figuren 4 und 5 zeigen beispielhaft zueinander alternative Möglichkeiten der lösbaren Anbringung der Stäbe 43 an den Anbringungsstellen 41. In der in Figur 4 gezeigten Variante werden die Stäbe 43 an den Anbringungsstellen 41 mittels einer Schraube 47 lösbar befestigt. In der in Figur 5 gezeigten Variante besteht eine lösbare Klemmverbindung zwischen den Stäben 43 und den Anbringungsstellen 41. In den Stäben 43 ist hierzu jeweils eine Ausnehmung 49 vorgesehen, in der ein Anschlagelement 51, im gezeigten Fall in Form einer Kugel, mittels einer Vorspanneinrichtung 53 nach außen hin vorgespannt wird. Über der Ausnehmung 49 ist an dem Stab 43 ein Gegenspannvorsprung 55 vorgesehen. Der Stab 43 kann von oben auf einen Befestigungsvorsprung 57 der Anbringungsstelle 41 aufgedrückt werden, sodass das Anschlagelement 51 nach Aufdrücken hinter dem Befestigungsvorsprung 57 einschnappt. Es wären auch andere Befestigungsarten zur Befestigung der Stäbe 43 an den Befestigungsstellen 41 denkbar, beispielsweise eine Magnetverbindung oder eine Steckverbindung.

Um zu gewährleisten, dass eine Unterfolienbahn 15 ausreichend fest durch die Klammerelemente 37 gehalten wird, umfassen die Transportketten 33 mehr Klammerelemente 37 als Anbringungsstellen 41. In der gezeigten Version (siehe Figur 2) sind jeweils zwischen zwei aufeinanderfolgenden Anbringungsstellen 41 zwei Klammerelemente 37 vorgesehen. Es wären aber auch andere Aufteilungen denkbar.

Da die Transportketten 33 jeweils Klammerelemente 37 und Anbringungsstellen 41 für die Stäbe 43 umfassen, lassen sich mit der Verpackungsmaschine 1 sowohl eine Unterfolienbahn 15 als auch Verpackungsschalen 17 als erster Verpackungsbestandteil 13 verarbeiten. Sollen Verpackungsschalen 17 verarbeitet werden, werden die Stäbe 43 zwischen gegenüberliegende Anbringungsstellen 41 der Transportketten 33 eingesetzt. Soll anschließend in einen anderen Verpackungsvorgang eine Unterfolienbahn 15 verarbeitet werden, werden die Stäbe 43 vorzugsweise wieder entfernt, um zu verhindern, dass diese den Betrieb der Siegelstation 9 unnötigerweise behindern.

In der dargestellten Ausführungsform umfasst die Verpackungsmaschine 1 eine Eingabeeinrichtung 59, mittels der wahlweise ein Folienverarbeitungs-Betriebsmodus oder ein Schalenverarbeitungs-Betriebsmodus auswählbar sind. Die Antriebseinrichtung 35 der Fördereinrichtung 11 ist dazu konfiguriert, in dem Folienverarbeitungs-Betriebsmodus die Transportketten 33 entlang der jeweiligen Kettenführung 31 in einer gleichbleibenden Vorschubrichtung (gleichbleibender Drehsinn) getaktet anzutreiben. Durch die Taktung wird die Verarbeitung durch die Siegelstation 9 und ggf. durch die Formstation 5 erleichtert. Der Vortrieb erfolgt immer in einer gleichbleibenden Vorschubrichtung, sodass die Unterfolienbahn 15 nach und nach entlang der Transportrichtung T durch die Verpackungsmaschine 1 gefördert wird. In dem Schalenverarbeitungs-Betriebsmodus dagegen ist die Antriebseinrichtung 35 dazu konfiguriert, die Transportketten 33 entlang der jeweiligen Kettenführung 31 derart getaktet anzutreiben, dass jeder Takt einen Vorschub der Transportketten 33 entlang der Vorschubrichtung sowie einen kleineren Rückschub der Transportketten 33 entgegen der Vorschubrichtung umfasst. Bei dem Vorschub der Transportketten 33 entlang der Vorschubrichtung werden die Verpackungsschalen 17 entlang der Transportrichtung T weitergefördert. Der Rückschub der Transportketten 33 entgegen der Vorschubrichtung sorgt dafür, dass nach einem Einschieben der Verpackungsschalen 17 in die Siegelstation 9 der entsprechende Stab 43 wieder aus dem Bewegungsbereich der Siegelstation 9 gefahren wird, sodass die Siegelstation 9 im Betrieb nicht behindert wird. Im nächsten Arbeitstakt nach dem Siegeln wird die gesiegelte Verpackungsschale 17 in dem Vorschubteil des Arbeitstakts wieder von dem Stab 43 aufgenommen und weiter entlang der Transportrichtung T aus der Siegelstation 9 gefördert.

In der dargestellten Ausführungsform umfasst die erste Unter-Siegelstation 9a eine Querschneideinrichtung 61, welche dazu konfiguriert ist, die Verpackungen nach dem Siegeln in dem Folienverarbeitungs-Betriebsmodus noch in der Siegelstation 9 in einer Schneidrichtung quer zu der Transportrichtung T voneinander zu separieren. Da lediglich ein Schnitt in Querrichtung erfolgt, hängen die Verpackungen in Querrichtung immer noch zusammen, sodass beim Verarbeiten einer Unterfolienbahn 15 noch ein Weiterfördern durch die Klammerelemente 43 erfolgen kann. Der Siegelstation 9 nachgeordnet umfasst die Verpackungsmaschine 1 eine Längsschneideinrichtung 63, die dazu konfiguriert ist, die Verpackungen in einer Schneidrichtung parallel zur Transportrichtung T zu separieren. Anschließend können die Verpackungen über ein Abführband 65 entnommen werden. Es wäre auch denkbar, dass die Querschneideinrichtung 61 der Siegelstation 9 nachgeordnet vorliegt.

Gemäß der gezeigten Ausführungsform umfasst die zweite Unter-Siegelstation 9b eine Vollschnitteinrichtung 65, die dazu konfiguriert ist, in dem Schalenverarbeitungs-Betriebsmodus die gesiegelten Verpackungsschalen 17 durch Schneiden der Oberfolienbahn 25 aus dem Verbund auszuschneiden. Es wäre auch denkbar, dass die Vollschnitteinrichtung 65 der Siegelstation 9 nachgeordnet vorliegt.

In den dargestellten Varianten wurden jeweils zwei Verpackungen in Querrichtung nebeneinander verarbeitet. Dies ist nicht zwingend erforderlich. Die Verpackungen könnten auch in einer einzigen Spalte hintereinander angeordnet sein. Auch wäre es denkbar, mehr als zwei Verpackungen entlang der Querrichtung nebeneinander zu bearbeiten.

## Patentansprüche

1. Verpackungsmaschine (1) mit
einer Einlegestrecke (7) zum Positionieren von zu verpackenden Produkten auf oder in einem ersten Verpackungsbestandteil (13);
einer Siegelstation (9) zum Bilden einer Verpackung durch siegelndes Verbinden eines zweiten Verpackungsbestandteils (23) mit dem ersten Verpackungsbestandteil (13); und
einer Fördereinrichtung (11) zum Fördern des ersten Verpackungsbestandteils (13) entlang einer Transportrichtung (T) durch die Einlegestrecke (7) und weiter zu der Siegelstation (9), wobei die Fördereinrichtung (11) bezüglich der Transportrichtung (T) zu beiden Seiten jeweils eine Kettenführung (31) mit einer entlang dieser antreibbar geführten Transportkette (33) umfasst,
wobei die Transportketten (33) jeweils als Klammerkette mit entlang der Kettenerstreckung hintereinander angeordneten Klammerelementen (37) zum klammernden Halten einer als erster Verpackungsbestandteil (13) zu fördernden Unterfolienbahn (15) ausgebildet sind, und
wobei die Transportketten (33) zudem jeweils entlang der Kettenerstreckung hintereinander angeordnete Anbringungsstellen (41) aufweisen, die mit korrespondierenden Anbringungsstellen (41) der bezüglich der Transportrichtung (T) auf der anderen Seite liegenden Transportkette (33) zum Anbringen von quer zur Transportrichtung (T) ausgerichteten Stäben (43) zum Transportieren von als erster Verpackungsbestandteil (13) zu fördernden Verpackungsschalen (17) zusammenwirken.

2. Verpackungsmaschine nach Anspruch 1, wobei die Stäbe (43) lösbar an jeweils korrespondierenden Anbringungsstellen (41) der Transportketten (33) anbringbar sind.

3. Verpackungsmaschine nach Anspruch 1 oder 2, wobei die Stäbe (43) durch eine Schraubverbindung, durch eine Klemmverbindung, durch eine Magnetverbindung oder durch eine Steckverbindung an jeweils korrespondierenden Anbringungsstellen (41) der Transportketten (33) anbringbar sind.

4. Verpackungsmaschine nach einem der vorangehenden Ansprüche, wobei ein Abstand zweier bezüglich der Kettenerstreckung aufeinander folgender Klammerelemente (37) kleiner ist als ein Abstand zweier bezüglich der Kettenerstreckung aufeinander folgender Anbringungsstellen (41).

5. Verpackungsmaschine nach einem der vorangehenden Ansprüche, wobei entlang der Kettenerstreckung jeweils zwischen zwei aufeinander folgenden Anbringungsstellen (41) mehrere Klammerelemente (37) angeordnet sind.

6. Verpackungsmaschine nach einem der vorangehenden Ansprüche, wobei die Siegelstation (9) ein Siegelwerkzeugoberteil (27) und ein Siegelwerkzeugunterteil (29) umfasst, die dazu konfiguriert sind, zum Ansiegeln einer Oberfolie (25) als zweiter Verpackungsbestandteil (23) an den ersten Verpackungsbestandteil (13) zusammenzuwirken.

7. Verpackungsmaschine nach einem der vorangehenden Ansprüche, wobei die Fördereinrichtung (11) eine Antriebseinrichtung (35) umfasst, die zum getakteten Antreiben der Transportketten (33) zu einer umlaufenden Bewegung entlang der jeweiligen Kettenführung (31) konfiguriert ist.

8. Verpackungsmaschine nach einem der Ansprüche 1 bis 6, wobei mittels einer Eingabeeinrichtung (59) der Verpackungsmaschine (1) ein Folienverarbeitungs-Betriebsmodus und ein Schalenverarbeitungs-Betriebsmodus auswählbar sind,
wobei eine Antriebseinrichtung (35) der Fördereinrichtung (11) in dem Folienverarbeitungs-Betriebsmodus zum getakteten Antreiben der Transportketten (33) entlang der jeweiligen Kettenführung (31) in einer gleichbleibenden Vorschubrichtung konfiguriert ist, und
wobei die Antriebseinrichtung (35) in dem Schalenverarbeitungs-Betriebsmodus zum getakteten Antreiben der Transportketten (33) entlang der jeweiligen Kettenführung (31) konfiguriert ist, wobei jeder Takt einen Vorschub der Transportketten (33) entlang der Vorschubrichtung und einen kleineren Rückschub der Transportketten (33) entgegen der Vorschubrichtung umfasst.

9. Verpackungsmaschine nach einem der vorangehenden Ansprüche, wobei die Siegelstation (9) zwei Siegel-Unterstationen (9a, 9b) mit jeweils einem Siegelwerkzeugoberteil (27) und einem Siegelwerkzeugunterteil (29) umfasst, wobei eine erste Siegel-Unterstation (9a) dazu konfiguriert ist, zum Bilden einer Verpackung eine Oberfolienbahn (25) als zweiten Verpackungsbestandteil (23) an eine als erster Verpackungsbestandteil (13) zu verarbeitende Unterfolienbahn (15) anzusiegeln, und wobei eine zweite Siegel-Unterstation (9b) dazu konfiguriert ist, zum Bilden einer Verpackung eine Oberfolienbahn (25) als zweiten Verpackungsbestandteil (23) an eine als erster Verpackungsbestandteil (13) zu verarbeitende Verpackungsschale (17) anzusiegeln.

10. Verpackungsmaschine nach einem der vorangehenden Ansprüche, wobei die Siegelstation (9) eine Querschneideinrichtung (61) umfasst, wobei die Querschneideinrichtung (61) dazu konfiguriert ist, die Verpackungen in einer Schneidrichtung quer zu der Transportrichtung (T) voneinander zu separieren.

11. Verpackungsmaschine nach einem der vorangehenden Ansprüche, wobei bezüglich der Transportrichtung (T) der Siegelstation (9) nachgeordnet eine Längsschneideinrichtung (63) vorgesehen ist, welche dazu konfiguriert ist die Verpackungen in einer Schneidrichtung parallel zur Transportrichtung (T) zu separieren.

12. Verpackungsmaschine nach einem der vorangehenden Ansprüche, welche zudem eine Formstation (5) umfasst, die zum Formen von Verpackungsmulden in der Unterfolienbahn (15) durch Tiefziehen ausgebildet ist.

13. Verpackungsmaschine nach Anspruch 12, wobei die Fördereinrichtung (11) dazu konfiguriert ist, die Unterfolienbahn (15) zu der Formstation (5), weiter zu der Einlegestrecke (7) und noch weiter zu der Siegelstation (9) zu fördern.

14. Verpackungsmaschine nach einem der vorangehenden Ansprüche, wobei die Fördereinrichtung (11) dazu konfiguriert ist, die Verpackungsschalen (17) durch schiebenden Eingriff mit den Stäben (43) zu fördern.

15. Verpackungsmaschine nach einem der vorangehenden Ansprüche, wobei die Fördereinrichtung (11) zumindest eine Auflagefläche (45) umfasst, auf der die Verpackungsschalen (17) während des Förderns durch die Stäbe (43) aufliegen.
